# EUROPEAN PATENT APPLICATION

(11) **EP 1 655 734 A2**
(43) Date of publication of application: **10.05.2006**
(21) Application number: 05256706.2
(22) Date of filing: 28.10.2005
(51) Int. Cl.: G11B 20/18

(54) **Information storage medium, recording/reproducing apparatus, recording/reproducing method, and host using the same**

(30) Priority: 06.11.2004 KR 2004090160
(71) Applicant: Samsung Electronics Co., Ltd., Suwon-si, Gyeonggi-Do (KR)
(72) Inventor: Rhyu, Sung-ryeul, Yongin-si, Gyeonggi-do, (KR); Ko, Jung-wan, Suwon-si, Gyeonggi-do, (KR); Hwang, Sung-hee, Yeongtong-gu, Suwon-si, Gyeonggi-do (KR)
(74) Representative: Robinson, Ian Michael

(57) **Abstract**

An information storage medium (700), a recording/reproducing apparatus using the same, and a recording/reproducing method using the same. The information storage medium (700) includes a data area (720) in which replacement information is managed for data replacement due to a defect of recorded data or data replacement by logical overwrite (LOW) due to updating of data. The data area (720) of the medium is formed of more than one R-zone, and a priority attribute (826) is assigned to each R-zone so that the data to be recorded in the medium can be recorded in each R-zone based on a priority of the data. Accordingly, by dividing a user data area (720) of the medium into a plurality of R-zones and writing data in each R-zone according to an attribute of data to be recorded, the user data area (720) of the medium can be used according to an instruction of a host (440), thereby improving medium usage efficiency.

## Description

The present invention relates in general to an information storage medium for supporting defect management of a user data area, a recording/reproducing apparatus using the same, a recording/reproducing method using the same, and a host using the same.

For rewritable information storage media, a spare area is in general prepared in a portion of a data area. Thus, if a defect is detected while user data is being recorded in a user data area (an area obtained by excluding the spare area from the data area) or while data recorded in the user data area is being reproduced, replacement data for replacing the defect data is recorded in the spare area.

For write-once information storage media, the above defect management method is used in a logical overwrite (LOW). LOW is a method by which write-once information storage media can be used similarly to the rewritable information storage media. That is, to update data already recorded in a user data area, data for replacing recorded data is recorded in a spare area by considering the recorded data to be defect data. This makes data management easy since a host refers to only the logical address when accessing data and data in the user data area is overwritten at the same location by fixing a logical address of the data recorded in the user data area and assigning a physical address corresponding to the logical address to data recorded in the spare area.

Furthermore, to maximize utilization of disc capacity, a method of updating data by LOW during defect management in an unrecorded area of a user data area or a spare area and generating replacement information (defect entry information) has been developed.

In a sequential recording mode in which the user data area is divided into one or a plurality of areas such as R-zones in a DVD or tracks in a CD and continuously used, data is recorded in each divided area by a command from the host. This host can efficiently manage the user data area of the disc by dividing the user data area into a plurality of small areas and discriminating some small areas for recording file system data from the other small areas for recording general user data. However, by allowing data replacement by LOW in the user data area, a drive system can record data for replacement in each of the small areas too.

Since the drive system cannot recognize whether data recorded in each small area is general user data or file system data for managing the general user data, the drive system can perform data replacement in an unrecorded area of the recordable small areas of the user data area of the disc. Thus, since arrangement of data recorded in a logical volume space managed by the host is somewhat different from data arrangement of a physical volume space recorded on the disc, it is difficult to manage the user data area of the disc according to the host command, thereby decreasing data recording/reproducing efficiency.

This will be described in more detail in the example below.

A file system records important information such as a specific application or metadata in a specific area. The metadata is comprised of a metadata file, a metadata mirror file, and a metadata bitmap file. The metadata mirror file is a file in which contents of the metadata file are duplicatedly recorded to guarantee reliability of data included in the metadata file. It is required that the metadata file and the metadata mirror file be physically deployed as far as possible from each other. By doing this, even if a portion of the metadata is damaged by a defect, the metadata can be recovered using the metadata mirror file.

It is assumed that the small areas of the user data area are R-zones similar to the R-zones in a DVD or to the tracks in a CD.

To record important information such as metadata, the file system reserves the last area of an information storage medium as an area of the metadata mirror file, records the metadata file whenever the contents of the metadata are modified, and records the metadata mirror file. To record the metadata mirror file, the file system reserves an R-zone and assigns 0 to a space bitmap to indicate that the R-zone is allocated. However, since the R-zone is physically not recorded yet, information on recording of each block is stored in the metadata bitmap file. One bit of the metadata bitmap file indicates whether one block of the metadata is used, 1 indicating an available space and 0 indicating an already occupied space.

The metadata file and the metadata mirror file are stored in the file system as if they are recorded. However, before the metadata file is recorded, though its logical space is reserved, its physical space remains in an unrecorded state in the R-zone.

In the prior art, it is impossible to prevent updated data from being recorded in the specific area for which the host expects a volume space reserved for metadata be used.

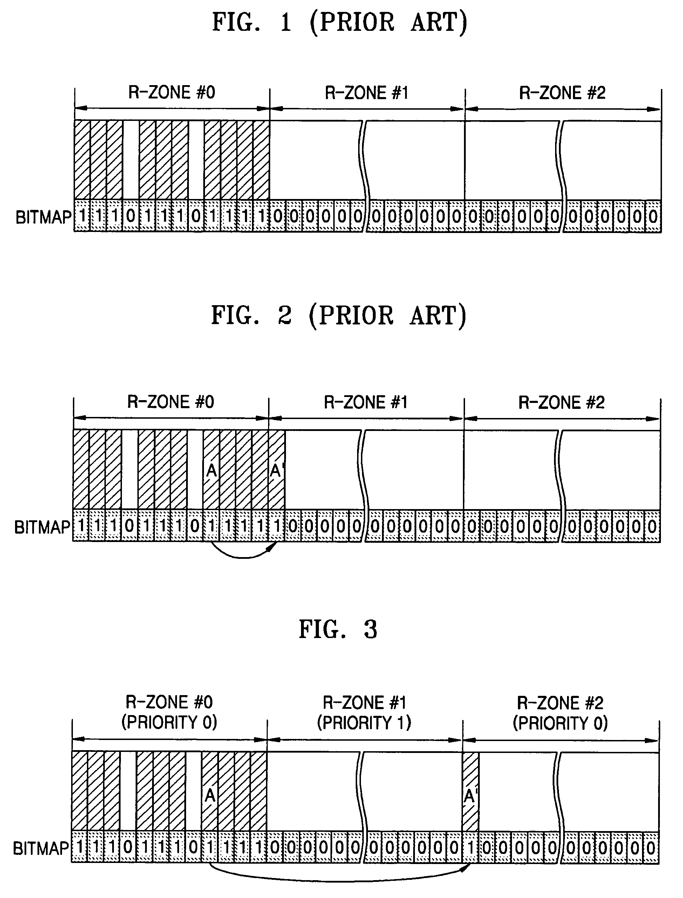

Figure 1 is a disc area arrangement plan for illustrating a method of using a disc by dividing an area of the disc into a plurality of R-zones according to the prior art.

Referring to Figure 1, the disc includes an R-zone #1 to record general data and R-zones #0 and #2 to record specific data of a host. A bitmap indicates whether data is recorded in predetermined unit blocks belonging to each R-zone. If data is recorded in each unit block, its bitmap is set to "1," and if data is not recorded in each unit block, its bitmap is set to "0." In this manner, if recording of the R-zone #0 is finished as shown in Figure 1, the R-zone #0 is in a closed state.

In this state, if a data block A recorded in the R-zone #0 is logically overwritten during data update without changing its logical address as in the case of a rewritable information storage medium, an updated data block A' is recorded in a next recordable location, i.e., the R-zone #1, as shown in Figure 2. That is, data is recorded in an R-zone different from the original zone R-zone #0.

In addition, since a host or drive system sending a command for reserving an R-zone and obtaining information on a state of the reserved R-zone cannot discriminate between the reserved R-zones, if data of a corresponding R-zone is updated without changing its logical address, it cannot be known which R-zone the updated data is recorded in. That is, since a method of discriminating between R-zones is not provided, neither the host nor the drive system can control this situation.

In other words, it is assumed that a command used to reserve an R-zone is a reservation track command and a command used to obtain information on a state of an R-zone is a read track information command.

The reservation track command uses the size of an R-zone to be reserved as an input parameter. With this command, a plurality of R-zones can be reserved, and the host can record data in those R-zones as desired. However, if already recorded data is updated without changing its logical address as in the case of a rewritable information storage medium, there is no method by which both the host and the drive system can guarantee which R-zone the updated data is recorded in.

According to the present invention there is provided an apparatus and method as set forth in the appended claims. Preferred features of the invention will be apparent from the dependent claims, and the description which follows.

In one aspect of the present invention, there is provided an information storage medium of which a user data area can be efficiently managed by a system using logical overwrite (LOW) for data replacement, a recording/reproducing apparatus using the same, a recording/reproducing method using the same, and a host using the same.

In another aspect of the present invention, there is provided an information storage medium in which replacement information is managed for data replacement due to a defect of recorded data or data replacement by logical overwrite (LOW) due to updating of data, a data area of the medium is constructed of more than one R-zone, and a priority attribute is granted to each R-zone so that data to be recorded in the medium can be recorded in each R-zone based on a priority of the data.

According to an aspect of the present invention, a new R-zone may be allocated to the medium according to the priority attribute granted to each R-zone.

According to an aspect of the present invention, the priority attribute of each R-zone may be granted by a host command of reserving an R-zone, the command including priority flag information.

According to another aspect of the present invention, there is provided a recording/reproducing apparatus including a write/read unit recording/reading data on/from an information storage medium in which replacement information is managed for data replacement due to a defect of recorded data or data replacement by logical overwrite (LOW) due to updating of data; and a controller assigning a data area of the medium with more than one R-zone and granting a priority attribute to each R-zone so that data to be recorded in the medium can be recorded in each R-zone based on a priority of the data.

According to an aspect of the present invention, the controller may allocate a new R-zone to the medium according to the priority attribute granted to each R-zone.

According to an aspect of the present invention, the controller may grant the priority attribute to each R-zone according to an instruction of a host command for reserving an R-zone, the command including priority flag information.

According to an aspect of the present invention, the controller may provide requested R-zone state information and priority attribute information of the R-zone to the host in response to a command from the host requesting information on the R-zone.

According to another aspect of the present invention, there is provided a host including a controller granting a priority attribute to each of a plurality of R-zones forming a data area on an information storage medium in which replacement information is managed for data replacement due to a defect of recorded data or data replacement by logical overwrite (LOW) due to updating of data so that data to be recorded in the medium can be recorded in each R-zone based on a priority of the data.

According to an aspect of the present invention, the controller may transmit a command requesting a reservation of an R-zone, the command including priority flag information, to a recording/reproducing apparatus using the medium.

According to an aspect of the present invention, the controller may transmit a command requesting information of an R-zone to the recording/reproducing apparatus using the medium and receive the requested R-zone state information and priority attribute information of the R-zone from the recording/reproducing apparatus.

According to another aspect of the present invention, there is provided a recording/reproducing method including recording/reading data on/from an information storage medium in which replacement information is managed for data replacement due to a defect of recorded data or data replacement by logical overwrite (LOW) due to updating of data; and forming a data area on the medium with more than one R-zone and granting a priority attribute to each R-zone so that data to be recorded in the medium can be recorded in each R-zone based on a priority of the data.

According to another aspect of the present invention, there is provided a recording/reproducing method including granting a priority attribute to each of a plurality of R-zones forming a data area of an information storage medium in which replacement information is managed for data replacement due to a defect of recorded data or data replacement by logical overwrite (LOW) due to updating of data so that data to be recorded in the medium can be recorded in each R-zone based on a priority of the data.

According to another aspect of the present invention, there is provided a computer readable medium having recorded thereon a reservation R-zone command, which is a command requesting a reservation of an R-zone, the command including priority flag information, to grant a priority attribute to each of a plurality of R-zones forming a data area of an information storage medium in which replacement information is managed for data replacement due to a defect of recorded data or data replacement by logical overwrite (LOW) due to updating of data.

According to another aspect of the present invention, there is provided a computer readable medium having recorded thereon an R-zone information block provided in response to a command of requesting information on an R-zone, wherein the R-zone information block includes the requested R-zone state information and priority attribute information of the R-zone.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 is a disc area arrangement plan for illustrating a method of using a disc by dividing an area of the disc into a plurality of R-zones according to the prior art;
Figure 2 is a disc area arrangement plan for illustrating a method of performing an LOW in the disc illustrated in Figure 1;
Figure 3 is a disc area arrangement plan for illustrating a method of performing an LOW in a disc in which an area of the disc is divided into a plurality of R-zones according to an embodiment of the present invention;
Figure 4 is a schematic block diagram of a recording/reproducing system according to an embodiment of the present invention;
Figure 5 is a structural diagram of a reservation R-zone command illustrated in Figure 4;
Figure 6 is a structural diagram of an R-zone information block illustrated in Figure 4;
Figure 7 is a structural diagram of a disc according to an embodiment of the present invention;
Figure 8 is a detailed structural diagram of RMD illustrated in Figure 7;
Figures 9A through 9C are structural diagrams of reservation R-zone commands according to an embodiment of the present invention;
Figures 10A through 10C are structural diagrams of a disc to which R-zone areas are allocated according to the reservation R-zone commands illustrated in Figures 9A through 9C;
Figure 11 is a flowchart illustrating a method of allocating an R-zone to a disc according to an embodiment of the present invention; and
Figure 12 is a flowchart illustrating a method of seeking information on an R-zone allocated to a disc according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

According to an aspect of the present invention, there is provided a method of discriminating between R-zones by granting a flag including priority information to a command for reserving an R-zone as a reservation track command. That is, in an embodiment of the present invention, there is provided a method of indicating a priority of an R-zone by adding priority information to a reserved R-zone as an input parameter to a reserved area through a command, in addition to size information of the reserved R-zone.

Figure 3 is a disc area arrangement plan for illustrating a method of performing an LOW in a disc in which an area of the disc is divided into a plurality of R-zones according to an embodiment of the present invention.

Referring to Figure 3, when a data block A is updated in a state illustrated in Figure 1, an updated data block A' can be recorded in an R-zone #2 having a priority 0, the same as that of an R-zone #0. Accordingly, in terms of a drive system and a host, data recorded in an R-zone can be recorded and managed using a priority of the data according to a command of the host.

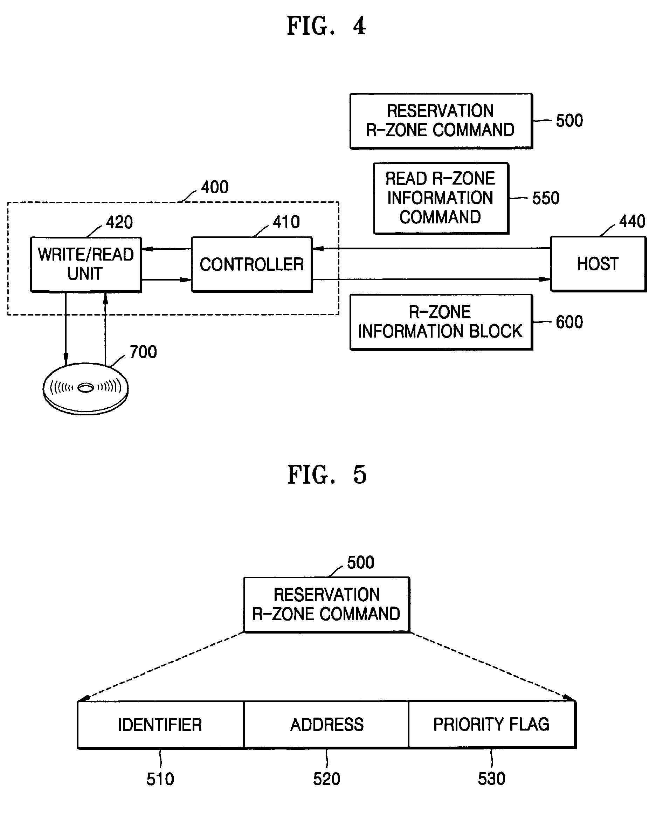

Figure 4 is a schematic block diagram of a recording/reproducing system according to an embodiment of the present invention.

Referring to Figure 4, the recording/reproducing system includes a recording/reproducing apparatus 400 and a host 440.

The host 440 transmits a recording command to the recording/reproducing apparatus 400 to record data on a disc 700, transmits a reproduction command to the recording/reproducing apparatus 400 to reproduce data from the disc 700 and receives the reproduced data from the recording/reproducing apparatus 400, and transmits a plurality of control commands to the recording/reproducing apparatus 400 to manage the disc 700 according to a command of the host 440.

According to an embodiment of the present invention, the host 440 transmits a reservation R-zone command 500 including a priority information flag to the recording/reproducing apparatus 400 to construct a data area of the disc 700 with a plurality of R-zones and grant a priority attribute to each R-zone. In addition, the host 440 transmits a read R-zone information command 550 to the recording/reproducing apparatus 400 to obtain information on an R-zone constructed on the disc 700. Thus the host 440 knows a priority of each R-zone by receiving an R-zone information block 600 in which priority information of the requested R-zone is included.

The recording/reproducing apparatus 400 includes a controller 410 and a write/read unit 420.

Under the control of the controller 410, the write/read unit 420 records data on the disc 700, which is an information storage medium according to the present embodiment, and reads data to reproduce the recorded data.

The controller 410 controls the write/read unit 420 to record data by a predetermined recording unit block according to an embodiment of the present invention or obtains valid data by processing data read by the write/read unit 420. In addition, the controller 410 controls the write/read unit 420 to record data by performing a logical overwrite (LOW) according to a command of the host 440 or a control of a drive system. If a defect is detected during data recording or by a verify-after-write process, the controller 410 controls the write/read unit 420 to record a replacement block to replace a defect block in a spare area. In LOW, data recorded in a user data area of a write-once recording medium is updated, i.e., replacement data is recorded in an unrecorded area of the spare area or user data area, and address information of the original data and the replacement data is managed so that a logical address used by the host 440 is not changed. Likewise, the controller 410 performs LOW replacement and defect replacement.

If the controller 410 receives the reservation R-zone command 500 from the host 440, the controller 410 reserves an R-zone on the disc 700 and grants the priority attribute to the reserved R-zone in response to the command 500. If the controller 410 receives the read R-zone information command 550 from the host 440, the controller 410 transmits the R-zone information block 600 including the requested R-zone state information and priority information granted to the R-zone to the host in response to the command 550.

Figure 5 is a structural diagram of the reservation R-zone command 500 illustrated in Figure 4.

Referring to Figure 5, the reservation R-zone command 500 includes an identifier 510 indicating that it is a reservation R-zone command, an address 520 indicating a location and a length of an R-zone to be reserved, and a priority flag 530 indicating a priority of the R-zone to be reserved. Since the priority flag 530 uses a reservation field, which is not used by the conventional reservation R-zone command or reservation track command, a file system or drive system according to the present embodiment can recognize the priority flag 530. Since a file system or drive system in which the present embodiment is not implemented cannot recognize only the priority flag 530, the reservation R-zone command 500 works without any problem in the conventional file system or drive system.

Since the drive system according to the present embodiment reserves an R-zone based on the priority flag 530 included in the reservation R-zone command 500, data can be updated according to a command of the host 440. Since the conventional drive system does not refer only to the priority flag 530, the file system according to the present embodiment can perform a conventional operation without an error, i.e., can reserve a simple R-zone to which a priority is not granted.

Both the conventional file system and the file system according to the present embodiment can reserve an R-zone as a space for storing data in both the drive system according to the present embodiment and the drive system in which the present embodiment is not implemented. In other words, the file system according to the present embodiment, i.e., a file system recognizing a function of granting priorities to R-zones, can reserve an R-zone by granting a priority to the R-zone as a space for storing data according to a specific instruction of the host 440 in the drive system, i.e., a drive system recognizing the function of granting priorities to R-zones. Thus, when a request of the file system is transmitted to the drive system the specific instruction of the host 440 is executed accordingly.

However, even if a request of the file system is transmitted to the drive system in which the present embodiment is not implemented, i.e., a drive system that cannot recognize the function of granting priorities to R-zones, since the priority flag 530 is provided using the reservation field, which is not used in the conventional reservation track command, an error is not generated after a command transmission, and compatibility is guaranteed. In this case, the only difference is that a priority is not granted to an R-zone reserved in response to an instruction of the host 440.

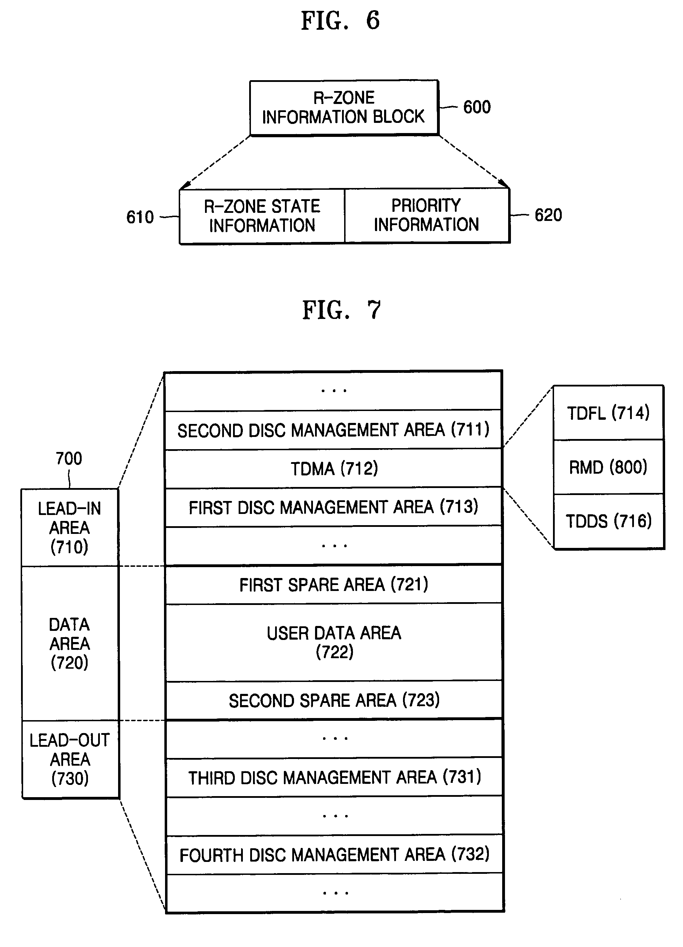

Figure 6 is a structural diagram of the R-zone information block 600 illustrated in Figure 4.

Referring to Figure 6, the R-zone information block 600 includes R-zone state information 610 indicating a state of an R-zone and priority information 620 indicating a priority granted to the R-zone.

According to an aspect of the present invention, the host 440 recognizes a priority of an R-zone through a flag including the priority information 620 added to the R-zone state information 610 in response to a command for reading state information of the R-zone such as the read track information command.

In the present embodiment, since the priority information 620 is provided using a reservation field of the R-zone information block 600, which is not used in a conventional drive system, a conventional operation can be performed without an error between a file system according to the present embodiment and a drive system in which the present embodiment is not implemented. In addition, since a drive system according to the present embodiment transmits the R-zone information block 600 including the priority information 620 to the host 440, the host 440 can perform a data rearrangement and a data update according to a recording instruction of a previous host.

That is, when an information storage medium C recorded by a host A and drive system B according to the present embodiment is loaded in a host D and drive system E according to the present embodiment, the host D can perform a data rearrangement and a data update on the information storage medium C according to an original instruction of the host A.

When a conventional information storage medium is loaded in the drive system according to the present embodiment, the priority information 620 is included in the R-zone information block 600 in response to the read R-zone information command. In this case, a value corresponding to a low priority is set to the priority information 620.

When an information storage medium according to the present embodiment or a conventional information storage medium is loaded in the conventional drive system, the priority information 620 is not included in the R-zone information block 600 in response to the read R-zone information command. In this case, since a location of the priority information 620 stored in the R-zone information block 600 transmitted by the conventional drive system is the reservation field, the value corresponding to the low priority is set to the priority information 620.

Figure 7 is a structural diagram of the disc 700 according to an embodiment of the present invention.

Referring to Figure 7, the disc 700, which is a write-once information storage medium, includes a lead-in area 710, a data area 720, and a lead-out area 730.

The lead-in area 710 includes a second disc management area 711, a temporary disc management area (TDMA) 712, and a first disc management area 713.

The TDMA 712 is an area for recording information of temporary defect management and temporary disc management for managing the write-once information storage medium 700.

The TDMA 712 includes a temporary defect list (TDFL) 714, recording management data (RMD) 800 and a temporary disc definition structure (TDDS) 716.

The TDFL 714 indicates information of a replacement state of defect replacement or LOW replacement and includes location information of defect data and location information of replacement data replacing the defect data.

The RMD 800 is an area indicating a data recording state using entry information in case the user data area 722 is used in a sequential recording mode. In particular, according to the present embodiment, priority information of each R-zone can be managed using the RMD 800 based on a priority flag set in a reservation R-zone command.

The TDDS 716 includes location pointers of the TDFL 714 and further includes location and size information of spare areas 721 and 723 assigned in an initializing operation, write protection information, location and size information of a temporary defect management area assigned in the data area 720, information of the user data area 722, information of a replaceable location in each spare area, and last recorded address information of the user data area 722.

A first disc management area 713, a second disc management area 711, a third disc management area 731 and a fourth disc management area 732 are areas to store final temporary disc management information when the write-once information storage medium 700 is finalized.

The data area 720 sequentially includes a first spare area 721, the user data area 722 and a second spare area 723.

The first and second spare areas 721 and 723 are areas to record therein replacement data replacing data recorded in the user data area 722. Data due to defect replacement or LOW replacement can be recorded in the spare areas 721 and 723.

The user data area 722 is an area for recording user data, and replacement data replacing the user data due to LOW. The replacement data is recorded not only in the spare areas 721 and 723 but also in the user data area 722. In particular, according to the present embodiment, the user data area 722 is divided into more than one R-zone, and a priority is granted to each divided R-zone according to a command from a host. This priority information, for example, can be recorded in the RMD 800.

A data format of the RMD 800 will now be described.

Two priorities, for example, can be granted to a plurality of R-zones forming the user data area 722 on the disc 700. That is, after file system data comprised of a volume structure and a file structure for managing general user data recorded on the disc 700 is recorded, a high priority for replacement recording of the file system data by a drive system when a LOW is performed is granted, and after general user data is recorded, a low priority for replacement recording of the general user data by the drive system when a LOW is performed is granted.

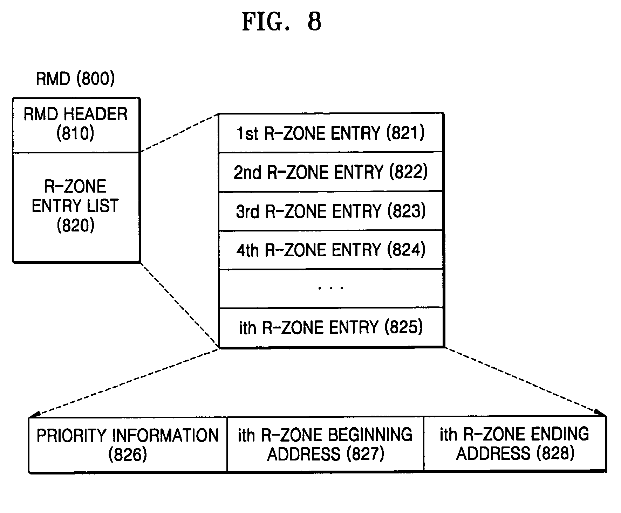

Figure 8 is a detailed structural diagram of the RMD 800 illustrated in Figure 7.

Referring to Figure 8, the RMD 800 includes an RMD header 810 including information of a group used in the user data area 722 and an R-zone entry list 820 indicating information of R-zones prepared in the user data area 722.

The R-zone entry list 820 includes a 1^{st} R-zone entry 821, a 2^{nd} R-zone entry 822, a 3^{rd} R-zone entry 823, a 4^{th} R-zone entry 824, ..., and i^{th} R-zone entry 825. Each R-zone entry indicates information on each R-zone.

The i^{th} R-zone entry 825 includes priority information 826 granted to an i^{th} R-zone, an i^{th} R-zone beginning address 827, and an i^{th} R-zone ending address 828.

The i^{th} R-zone beginning address 827 and the i^{th} R-zone ending address 828 indicate an area allocated to the i^{th} R-zone on the disc 700.

The priority information 826 granted to the i^{th} R-zone is recorded based on a priority flag value provided by a reservation R-zone command received from a host, and if R-zone state information is requested by the host, the priority information 826 can be included in an R-zone information block and transmitted to the host.

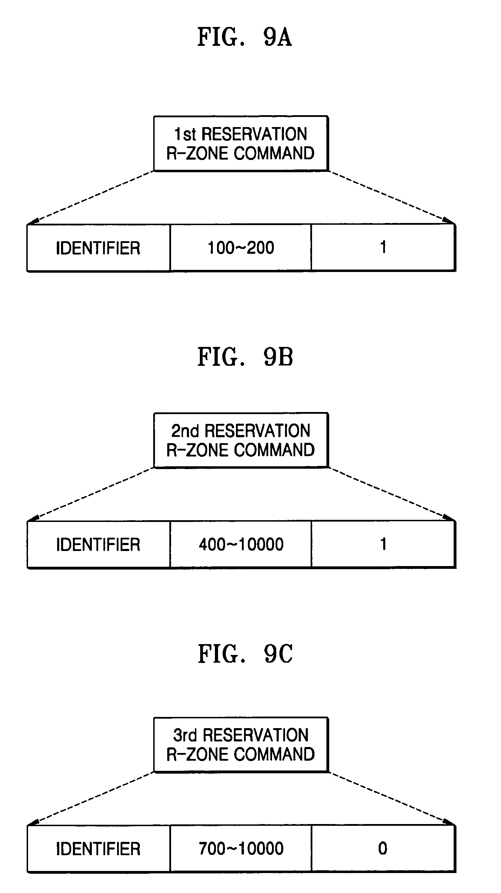

An example of reserving R-zones on a disc according to reservation R-zone commands received from a host according to an embodiment of the present invention will now be described with reference to Figures 9A through 10C.

Here, it is assumed that if a priority flag of a reservation R-zone command is set to "1," a priority of a reserved R-zone is high, and if the priority flag is set to "0," the priority of the reserved R-zone is low. When data recorded in an R-zone to which a high priority is granted is logically overwritten, updated data is recorded in an R-zone whose priority is high or low. When data recorded in an R-zone to which a low priority is granted is logically overwritten, updated data is recorded in only an R-zone whose priority is low. However, if R-zones whose priorities are low are all in a closed state since data is recorded in the R-zones, and if an available space to be reserved does not remain in an information storage medium, data also can be updated in an area whose priority is high since only one kind of priority exists for recordable R-zones.

As shown in Figure 9A, the host transmits a 1^{st} reservation R-zone command to a drive system to reserve an R-zone whose beginning address is 100, ending address is 200, and priority flag is set to "1," i.e., the high priority.

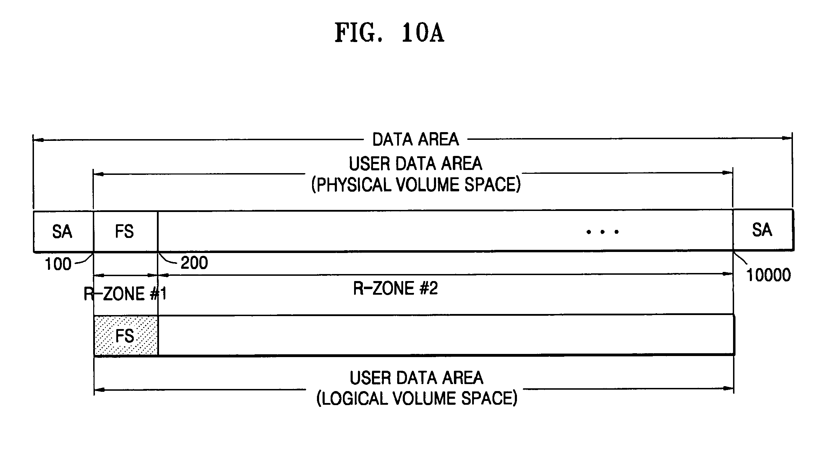

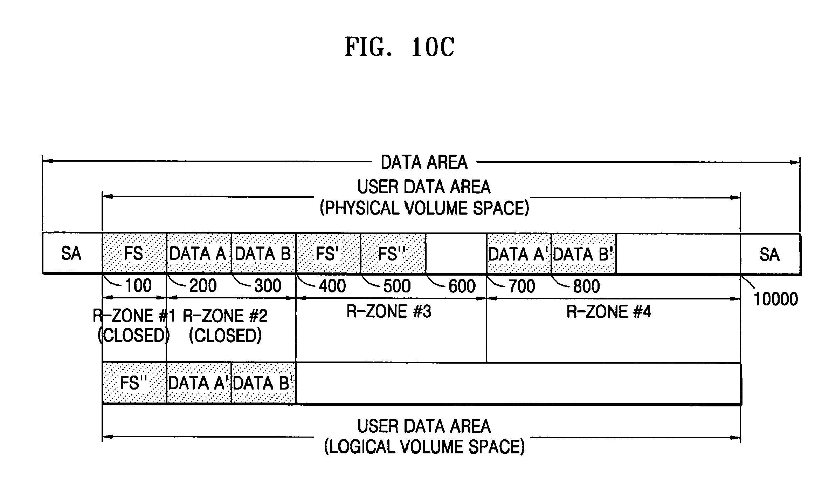

In response to the 1^{st} reservation R-zone command, the drive system reserves an R-zone #1 located between the address 100 and the address 200 of a user data area of a disc as shown in Figure 10A. The high priority is granted to the R-zone #1 to record file system data, and the low priority is granted to an R-zone #2 to record general user data, and after initialized file system data FS is recorded in the R-zone #1, the R-zone #1 is closed since data cannot be added any more in the R-zone #1.

After the 1^{st} recording, if general user data is recorded, the file system data FS should be updated, and an R-zone whose priority is high according to an embodiment of the present invention is necessary for LOW replacement. Thus, the host transmits a 2^{nd} reservation R-zone command as shown in 9B to the drive system to allocate an R-zone to an area from an address 400 to an address 10000 and grant the high priority to the allocated R-zone.

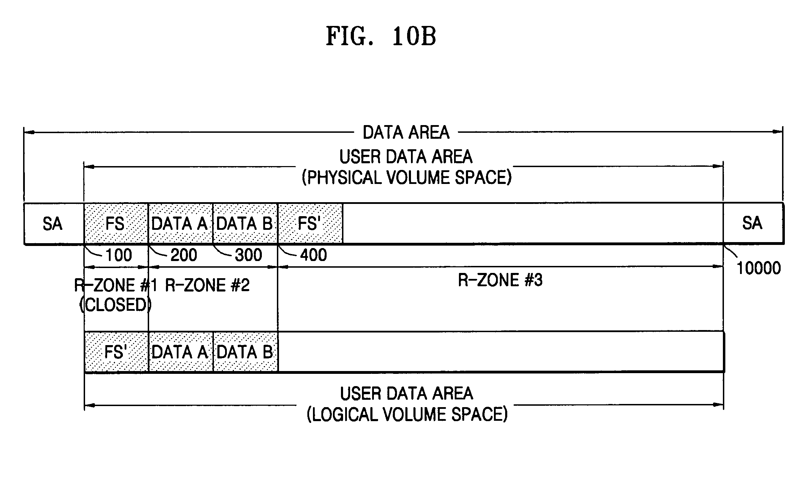

In response to the 2^{nd} reservation R-zone command, the drive system allocates an R-zone #3 to the area from the address 400 to the address 10000 and grants the high priority to the R-zone #3 as shown in Figure 10B. Accordingly, the R-zone #2 is allocated to the area from the address 200 to the address 400, and the low priority is granted to the allocated R-zone #2. Then, the drive system records data A and data B in the R-zone #2, closes the R-zone #2 since data cannot be recorded any more in the R-zone #2, and records updated file system data FS' in the R-zone #3 since an update of the file system data FS is requested due to the data addition.

After the 2^{nd} recording shown in Figure 10B, if an update of the data A and data B recorded in the R-zone #2 is requested, the host transmits a 3^{rd} reservation R-zone command of allocating an R-zone having the low priority to an area from an address 700 to the address 10000 as shown in Figure 9C to the drive system in order to reserve the R-zone in which data A' and data B' will be recorded by the drive system for replacement of the data A and data B.

In response to the 3^{rd} reservation R-zone command, the drive system allocates an R-zone #4 and grants the low priority to the allocated R-zone #4. To update the data A and data B recorded in the R-zone #2, if the host transmits a command of recording the updated data A' and data B' in the same logical addresses as the data A and data B to the drive system, the drive system records the updated data A' and data B' in the R-zone #4 as replacement by recognizing that data has been already recorded in physical addresses corresponding to the logical addresses by the host write command and recognizing that an R-zone having the same priority as an R-zone corresponding to the physical addresses is the R-zone #4. Thereafter, since an update of the file system data FS' is requested, if the host transmits a command of recording updated file system data FS" in the same logical addresses as the file system data FS recorded in the R-zone #1 to the drive system by a LOW, the drive system records the updated file system data FS" in the R-zone #3 as replacement by recognizing that data has been already recorded in physical addresses corresponding to the logical addresses by the host write command and recognizing that an R-zone having the same priority as an R-zone corresponding to the physical addresses is the R-zone #3.

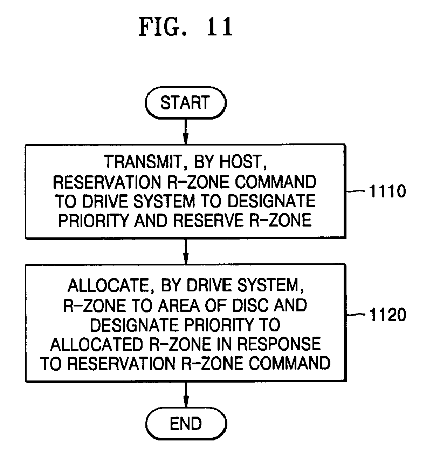

Figure 11 is a flowchart illustrating a method of allocating an R-zone to a disc according to an embodiment of the present invention.

A host transmits a reservation R-zone command to a drive system to designate a priority and reserve an R-zone in operation 1110.

The drive system allocates an R-zone to an area of the disc and designates a priority to the allocated R-zone in response to the received reservation R-zone command in operation 1120.

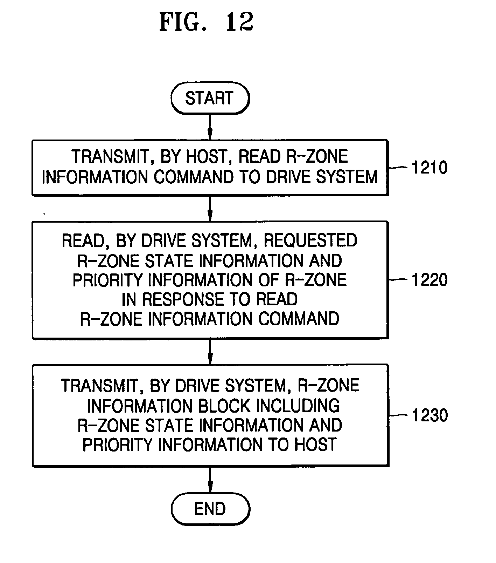

Figure 12 is a flowchart illustrating a method of seeking information on an R-zone allocated to a disc according to an embodiment of the present invention.

A host transmits a read R-zone information command to a drive system in operation 1210.

The drive system reads requested R-zone state information and priority information of the R-zone in response to the received read R-zone information command in operation 1220.

The drive system transmits an R-zone information block including the R-zone state information and priority information to the host in operation 1230.

The embodiments of the present invention can be written as computer programs and can be implemented in general-use digital computers that execute the programs using a computer readable recording medium. Examples of the computer readable recording medium include magnetic storage media (e.g., ROM, floppy discs, hard discs, etc.), optical recording media (e.g., CD-ROMs, DVDs, etc.), and storage media such as carrier waves (e.g., transmission through the internet). The computer readable recording medium can also be distributed over network coupled computer systems so that the computer readable code is stored and executed in a distributed fashion. And the functional programs, codes and code segments for embodying the present invention may be easily deducted by programmers in the art which the present invention belongs to.

As described above, according to embodiments of the present invention, by dividing a user data area of the medium into a plurality of R-zones and writing data in each R-zone according to an attribute of data to be recorded, the user data area of the medium can be used according to an instruction of a host, thereby improving medium usage efficiency.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information storage medium in which replacement information is managed for data replacement due to a defect of recorded data or data replacement by logical overwrite (LOW) due to updating of the data, the information storage medium comprising:
a data area (720) including more than one R-zone; and
at least one priority attribute (826) assigned to each R-zone so that the data to be recorded in the information storage medium is recorded in each R-zone based on a priority of the data.

2. The medium of claim 1, wherein a new R-zone is allocated to the information storage medium according to the priority attribute (826) assigned to each R-zone.

3. The medium of claim 1 or 2, wherein the priority attribute (826) of each R-zone is assigned by a host command (500), the host command (500) including priority flag information (530).

4. The medium of claim 3, wherein the host command (500) further includes an identifier (510) indicating that the host command (500) is a reservation R-zone command and an address (520) indicating a location and a length of the R-zone to be reserved.

5. The medium of claim 1, wherein a high priority for replacement recording of a file system data by a drive system when a logical overwrite (LOW) is performed is granted, and after general user data is recorded, a low priority for replacement recording of the general user data by the drive system when a LOW is performed is granted.

6. A recording/reproducing apparatus comprising:
a write/read unit (420) recording/reading data on/from an information storage medium (700) in which replacement information is managed for data replacement due to a defect of recorded data or data replacement by logical overwrite (LOW) due to updating of the data; and
a controller (410) assigning a data area (720) on the information storage medium (700) with more than one R-zone and granting a priority attribute (826) to each R-zone so that the data to be recorded in the information storage medium (700) is recorded in each R-zone based on a priority of the data.

7. The apparatus of claim 6, wherein the controller (410) allocates a new R-zone to the information storage medium (700) according to the priority attribute (826) assigned to each R-zone.

8. The apparatus of claim 6 or 7, wherein the controller (410) grants the priority attribute (826) to each R-zone according to an instruction of a host command (500) for reserving an R-zone, the command including priority flag information (530).

9. The apparatus of claim 8, wherein the host command (500) further includes an identifier (510) indicating that the host command (500) is a reservation R-zone command and an address (520) indicating a location and a length of the R-zone to be reserved.

10. The apparatus of any of claims 6 to 9, wherein the controller (410) provides requested R-zone state information and priority attribute information of the R-zone to a host in response to a command from the host requesting information of the R-zone.

11. The apparatus of claim 6, wherein each R-zone is reserved without granting a priority attribute (826).

12. The apparatus of claim 10, wherein the host (440) recognizes the priority attribute information of the R-zone through a flag including the priority information added to an R-zone state information in response to a command of the controller (410) for reading the R-zone state information.

13. The apparatus of claim 12, wherein the priority attribute information is provided on a reservation field of an R-zone information block.

14. A host (440) comprising:
a controller (410) granting a priority attribute (826) to each of a plurality of R-zones assigning a data area (720) on an information storage medium (700) in which replacement information is managed for data replacement due to a defect of recorded data or data replacement by logical overwrite (LOW) due to updating of the data so that data to be recorded in the information storage medium (700) is recorded in each R-zone based on a priority of the data.

15. The host (440) of claim 14, wherein the controller (410) transmits a command requesting a reservation of an R-zone, the command including priority flag information (530), to a recording/reproducing apparatus using the medium.

16. The host (440) of claim 15, wherein the command further includes an identifier (510) indicating that the command is a reservation R-zone command and an address (520) indicating a location and a length of the R-zone to be reserved.

17. The host (440) of claim14, 15 or 16, wherein the controller (410) transmits a command requesting information of an R-zone to the recording/reproducing apparatus using the medium and receives the requested R-zone information from the recording/reproducing apparatus.

18. The host (440) of claim 17, wherein the requested R-zone information includes state information and priority attribute information.

19. A recording/reproducing method comprising:
recording/reading data on/from an information storage medium (700) in which replacement information is managed for data replacement due to a defect of recorded data or data replacement by logical overwrite (LOW) due to updating of the data; and
assigning a data area (720) on the medium with more than one R-zone and granting a priority attribute (826) to each R-zone so that the data to be recorded in the information storage medium (700) is recorded in each R-zone based on a priority of the data.

20. The method of claim 19, further comprising:
allocating a new R-zone to the information storage medium (700) according to the priority attribute (826) assigned to each R-zone.

21. The method of claim 19 or 20, wherein the granting of the priority attribute (826) comprises:
granting the priority attribute (826) to each R-zone according to an instruction of a host command (500) for reserving an R-zone, the command including priority flag information (530).

22. The method of claim 19, 20 or 21, further comprising:
providing requested R-zone state information and priority attribute information of the R-zone to a host (440) in response to a command from the host (440) requesting information on the R-zone.

23. A recording/reproducing method comprising:
granting a priority attribute (826) to each of a plurality of R-zones assigning a data area (720) on an information storage medium (700) in which replacement information is managed for data replacement due to a defect of recorded data or data replacement by logical overwrite (LOW) due to updating of the data so that the data to be recorded in the information storage medium (700) is recorded in each R-zone based on a priority of the data.

24. The method of claim 23, further comprising:
transmitting a command for granting a priority attribute (826) which is a command requesting a reservation of an R-zone, the command including priority flag information (530) to a recording/reproducing apparatus using the medium.

25. The method of claim 23 or 24, further comprising:
transmitting a command requesting information of an R-zone to the recording/reproducing apparatus using the information storage medium (700) and receiving the requested R-zone information from the recording/reproducing apparatus.

26. The method of claim 25, wherein the requested R-zone information includes state information and priority attribute information.

27. A computer readable medium having recorded thereon a reservation R-zone command, which is a command requesting a reservation of an R-zone, the command including priority flag information (530), to grant a priority attribute (826) to each of a plurality of R-zones assigning a data area (720) on an information storage medium (700) in which replacement information is managed for data replacement due to a defect of recorded data or data replacement by logical overwrite (LOW) due to updating of the data.

28. A computer readable medium having an R-zone information block recorded thereon in response to a command requesting information of an R-zone,
wherein the R-zone information block includes the requested R-zone state information and priority attribute information of the R-zone.

29. A recording/reproducing method comprising:
transmitting a reservation R-zone command to a drive system to designate a priority and reserve an R-zone in an information storage medium (700);
allocating the R-zone on an area of the information storage medium (700) and designating the priority to the allocated R-zone in response to the reservation R-zone command;
transmitting a read R-zone command to the drive system; and
transmitting an R-zone information block including R-zone state information and priority information to the host (440).
